# EUROPÄISCHE PATENTSCHRIFT

(11) **EP 0 935 773 B1**
(45) Veröffentlichungstag und Bekanntmachung des Hinweises auf die Patenterteilung: **21.02.2001**
(21) Anmeldenummer: 97948778.2
(22) Anmeldetag: 22.10.1997
(51) Int. Cl.: G02B 21/34, G01N 1/31, G01N 1/28

(54) **ANLAGE FÜR DEN EINSCHLUSS VON HISTOLOGISCHEN UND BIOLOGISCHEN PROBEN**
APPARTUS FOR PLACING A COVER ON A HISTOLOGICAL AND BIOLOGICAL SPECIMEN
DISPOSITIF DE COUVERTURE DES ECHANTILLONS HISTOLOGIQUES ET BIOLOGIQUES

(30) Priorität: 01.11.1996 RU 96121684
(43) Veröffentlichungstag der Anmeldung: 18.08.1999
(73) Patentinhaber: Microm International GmbH, 69190 Walldorf (DE)
(72) Erfinder: IZVOZTCHIKOV, Ilia Borisovitch, St. Petersburg, 194223 (RU); MIKHAILOV, Serguei Petrovitch, St. Petersburg, 194175 (RU)
(74) Vertreter: Gnatzig, Klaus
(86) Internationale Anmeldenummer: EP9705829
(87) Internationale Veröffentlichungsnummer: WO9820379

(56) Entgegenhaltungen:
- WO-A-94/14097
- DE-U- 29 514 506
- US-A- 3 833 449
- US-A- 3 930 928
- US-A- 4 171 241

## Beschreibung

Die zum Patent angemeldete Erfindung bezieht sich auf den Bereich der Medizin. Unter anderem kann sie für Diagnostikgeräte, und vor allem bei den Anlagen für einen Einschluß von histologischen und biologischen Proben in einem optischen Medium zwecks ihrer Mikroskopuntersuchung verwendet werden.

Speziell präparierte, einen Farbstoff enthaltende histologische und biologische Proben werden in ein optisch homogenes Medium gebracht und innerhalb einer erforderlichen Zeit untersucht. Als optisches Medium werden verschiedene Stoffe verwendet, so z. B. Kanadabalsam oder Polystyrol.

Der Probeneinschluß erfolgt vorwiegend manuell. Dazu wird die auf dem Präparatglas liegende Probe mit einer Dosis eines jeweiligen im Xylol gelösten Stoffes behandelt und danach mit dem Deckglas sorgfältig eingeschlossen (G.I. Roskin. Mikroskopieverfahren. Verlag "Sowjetskaja nauka", Moskau 1951, S. 152; G.A. Merkulow. "Kurzer Kurs, Pathohistologische Verfahren". Verlag "Medgis", Leningrad, 1951, S. 86; B. Romejs. Mikroskopieverfahren. Verlag "IL", Moskau, 1953, S. 191-192). Ein anderes Verfahren besteht darin, daß auf das Deckglas von entsprechender Größe ein Tropfen von im Xylol gelöstem Harz aufgetragen wird. Dann wird das Präparatglas mit der Probe behutsam gesenkt, bis die Probe mit dem Lösungstropfen auf dem Deckglas in Berührung kommt (R. Lilli. Pathohistologische Verfahren und angewandte Histochemie. Verlag "Mir", Moskau, 1969, S. 85).

In allen angegebenen Beiträgen wird erwähnt, daß bei dem manuellen Einschluß unter das Deckglas Luftblasen eindringen und das mikroskopische Bild entstellen. Die Luftblasen können entfernt werden, indem mit der Spitze der Präpariernadel leicht auf das Deckglas gedrückt wird. B. Romejs meint jedoch, daß dieses Verfahren das Präparat beschädige. Außerdem ist der manuelle Probeneinschluß arbeitsaufwendig, wenig produktiv und setzt darüber hinaus ein qualifiziertes und erfahrenes Personal voraus.

Unter den vorhandenen Einschlußanlagen steht in bezug auf die Leistungen die Anlage Consul, ein Produkt der englischen Firma Shandon, der angemeldeten Erfindung am nächsten. Sie umfaßt einen Behälter für Deckgläser, einen Halter für Präparatgläser, eine Dosieranlage für die Lösung des optischen Mediums und eine Walzeinheit.

Der Halter für Präparatgläser besteht aus einigen an einem Stab befestigten Halbrahmen, die sich in der zum Stab senkrecht liegenden Ebene drehen. Die Walzeinheit in der Anlage Consul besteht aus einem Tisch mit zwei Rollen, die sich in der Ausgangslage unterhalb des Deckglases befinden. Der Tisch und die Rollen können senkrecht zur Ebene des Deckglases verschoben werden. Die Rollen können auch mit gefederten Triebstangen zurückweichen.

Die Präparatgläser werden an eine Stange angebracht, die sich vertikal verschiebt. Mittels einer Drehvorrichtung gelangt das Präparatglas in den Arbeitsbereich. Der Behälter für Deckgläser und die Lösungsdosieranlage sind auf einem Gestell befestigt.

Die Anlage Consul funktioniert folgenderweise: Der Schieber für Deckgläser bewegt sich auf den Führungsschienen und schiebt das untere Glas aus dem Behälter in den Arbeitsbereich. Von oben wird auf das Deckglas eine Dosis der Lösung des optischen Mediums getropft. Die Drehvorrichtung verschiebt einen Halbrahmen mit einem Präparatglas und bringt dieses in den Arbeitsbereich oberhalb des Deckglases, so daß die Probe nach unten gewendet ist. Der Tisch der Walzeinheit hebt sich und bringt das Deckglas ganz nah zum Präparatglas. Der Schieber der Walzeinheit hebt die Rollen, bis sie mit dem Deckglas in Berührung kommen. Danach weichen die gefederten Triebstangen zurück, und die Rollen walzen die Oberfläche des Deckglases. Auf diese Weise wird der Mittelteil des Deckglases mit dem Tisch gepreßt, und die Seitenteile werden mit den Rollen gewalzt. Danach sinkt die Walzeinheit, und die Drehvorrichtung bringt den Halbrahmen mit dem eingeschlossenen Präparatglas in die Ausgangslage.

Die Anlage Consul ermöglicht bis 400 Proben pro Stunde einzuschließen. Dank der hohen Leistungsfähigkeit kann sie in Laboratorien für pathohistologische Untersuchungen erfolgreich verwendet werden.

Der Nachteil der Anlage Consul ist die waagerechte Lage des Deckglases und des Präparatglases während der Pressung, wodurch die Entfernung der Luftblasen aus dem optischen Medium erschwert wird. Dieser Nachteil liegt auch bei den in den US-A 3,833,449, US-A 4,171,241, US-A 3,930,928, DE-U 295 14 506 oder WO-A 94/14079 beschriebenen Vorrichtungen vor.

Der technische Vorteil der angemeldeten Anlage besteht darin, daß sich in den einzuschließenden Proben keine Luftblasen bilden.

Dieser Vorteil wird gemäß der Erfindung durch eine Vorrichtung mit den Merkmalen des Anspruches 1 erzielt. Vorteilhafte Ausgestaltungen der Erfindung ergeben sich aus den Merkmalen der abhängigen Ansprüche.

Gemäß der vorliegenden Erfindung ist eine Halterung zur Aufnahme der abzudeckenden Objektträger in einer zur Horizontalen geneigten Stellung und eine Einrichtung zum Aufbringen des jeweiligen Deckglases auf den geneigt ausgerichteten Objektträger vorgesehen. Es hat sich gezeigt, daß durch eine um mindestens 45° gegenüber der Horizontalen geneigte, vorzugsweise eine vertikale Ausrichtung des Objektträgers beim Eindecken eingeschlossene Luftblasen leichter entweichen können.

Bei einem vorteilhaften Ausführungsbeispiel der Erfindung ist die Einrichtung zum Aufbringen der Deckgläser dreh- oder schwenkbar an dem die Halterung für die Objektträger tragenden Bauteil angeordnet. Mit dieser Einrichtung werden die Deckgläser durch eine Drehbewegung an den vertikal ausgerichteten Objektträger herangeführt und an diesen herangepreßt. Die Dreh- oder Schwenkachse sollte dabei horizontal beweglich, vorzugsweise gegen eine Federkraft, gelagert sein. Durch die horizontal bewegliche Lagerung der Dreh- oder Schwenkachse wird erreicht, daß die Linie maximaler Anpreßkraft zwischen Deckglas und Objektträger während der Drehbewegung in vertikaler Richtung wandert, so daß die Dreh- oder Schwenkbewegung zu einem Anwalzen des Deckglases an dem Objektträger führt. Bei federnder Lagerung der Dreh- oder Schwenkachse ist die Anpreßkraft im wesentlichen durch die Federkraft bestimmt. In der Grundstellung, d.h. vor dem Aufbringen des Deckglases, ist die Drehachse horizontal versetzt zur vertikalen Ebene des Deckglases. Während der Dreh- oder Schwenkbewegung wandert die Drehachse in horizontaler Richtung, passiert dabei die vertikale Ebene des Objektträgers und ist schließlich in der Endstellung auf der anderen Seite der Ebene des Objektträgers positioniert.

Zum Bewegen der Deckgläser kann die Einrichtung zum Aufbringen der Objektträger einfach durch ein Fenster in einer zur Aufnahme des Deckglases dienenden Stützplatte hindurchgreifen. Mittels einer Schubvorrichtung, die zum Transport einzelner Deckgläser dient, können die Deckgläser aus einem Vorratsbehälter in eine das Fenster der Stützplatte abdeckende Position gebracht werden.

Die Vorrichtung nach der Erfindung ist vorzugsweise als manuelles Gerät ausgeführt, wobei für die Dreh- bzw. Schwenkbewegung der Einrichtung zum Aufbringen der Deckgläser und für die Vorschubvorrichtung zum Transport der Deckgläser aus dem Vorratsbehälter in die das Fenster der Stützplatte abdeckende Position als handgetriebene Hebel oder Stangen ausgebildet sind. Dabei ist es mit einfachen Mitteln auch möglich, beide Antriebe miteinander mechanisch zu koppeln.

Nachfolgend werden Einzelheiten der Erfindung anhand des in den Figuren dargestellten Ausführungsbeispiels näher erläutert. Im einzelnen zeigen:
- Figur 1:: Einen Schnitt durch eine erfindungsgemäße Anordnung in einer vertikalen Ebene und
- Figur 2:: einen Schnitt durch die Anordnung nach Figur 1 in einer zur Figur 1 senkrechten Ebene.

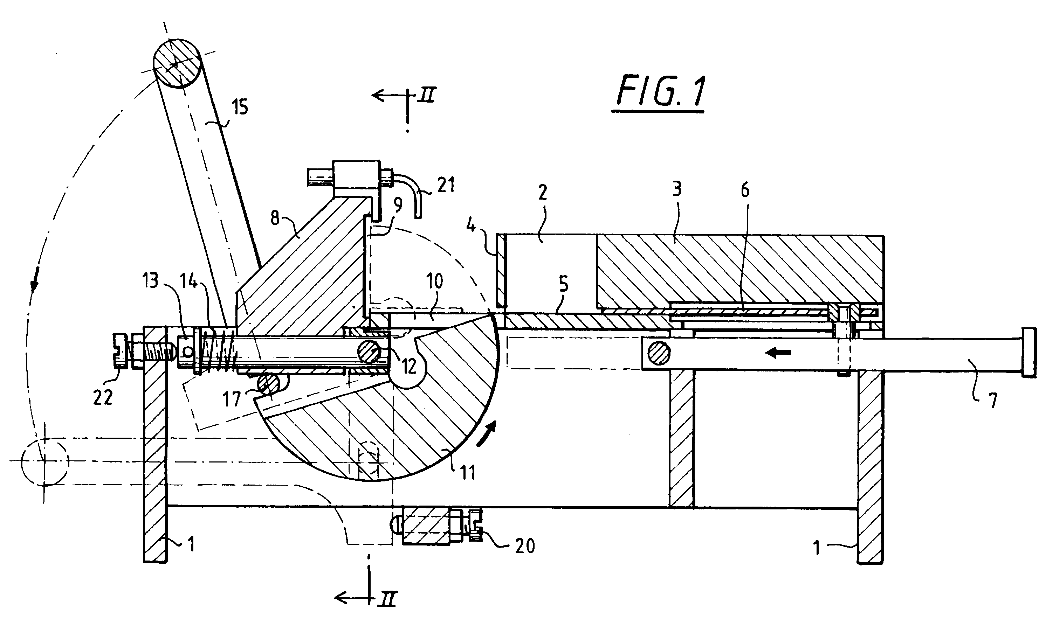

In der Figur 1 ist mit (1) das Grundgestell der Anordnung bezeichnet. Auf diesem Grundgestell ist der Behälter für Deckgläser angeordnet. Er besteht aus seitlichen Stangen (3), einer unteren Stützplatte (5) und einer vertikalen Platte (4). Der zwischen den seitlichen Stangen (3), der Grundplatte (5) und der vertikalen Platte (4) definierte Hohlraum dient als Behälter für Deckgläser. Die vertikale Platte (4) bildet dabei die Vorderwand des Behälters. Die Stützplatte (5) ragt zur Vorderseite des Behälters unter der vertikalen Platte (4) hervor. Zwischen der vertikalen Platte (4) und der Stützplatte (5) ist ein linearer Abstand vorgesehen, der größer ist als die Dicke eines Deckglases, aber kleiner als die Dicke von zwei Deckgläsern.

Zwischen den Stangen (3) und der Stützplatte (5) ist ein Schieber (6) vorgesehen, dessen Führung durch die Seitenwände des Behälters in nicht dargestellter Weise gebildet wird. Der Schieber (6) ist als eine Platte ausgeführt, deren Dicke kleiner als die Dicke eines Deckglases ist. Der Schieber (6) kann durch eine Antriebsstange bedient werden.

Auf dem Grundgestell (1) ist weiter ein Halter (8) zur Aufnahme von Objektträgern fest angeordnet. Dieser Halter (8) weist Nuten auf, in die ein Objektträgerglas vertikal oder annähernd vertikal eingesteckt werden kann. Bei in die Nuten (9) eingestecktem Objektträgerglas sollte die Flächennormale des Objektträgerglases einen Winkel von mehr als 45° zur Vertikalen aufweisen. Der Halter (8) schließt sich dabei unmittelbar an die Stützplatte (5) an, so daß ein in den Halter (8) eingestecktes Objektträgerglas unmittelbar benachbart zur Stützplatte (5) jedoch nahezu senkrecht dazu positioniert ist.

Weiterhin ist am Grundgestell (1) ein Segment (11) drehbar angeordnet, das eine Einrichtung zum Aufbringen der Deckgläser auf einen eingesetzten Objektträger bildet. Die Drehachse (12) des Segmentes (11) ist dabei horizontal angeordnet und selbst wiederum relativ zum Grundgestell (1) linear verschiebbar. Für diese lineare Verschiebbarkeit der Drehachse (12) ist die Drehachse (12) in einem vorzugsweise runden Bauteil (13), einer Walze aufgenommen, das selbst wieder gegen die Kraft einer Feder (14) horizontal verschiebbar am Grundgestell (1) aufgenommen ist. Das drehbare Segment (11) kann durch ein Fenster (10) im verlängerten Bereich der Stützplatte (5) hindurchgreifen. Das Fenster (10) in der Stützplatte (5) weist dazu eine Breite (b) auf, die geringer ist als die Länge ( c ) lines Deckglases aber größer als die Dicke (d) des Segments (11) ist.

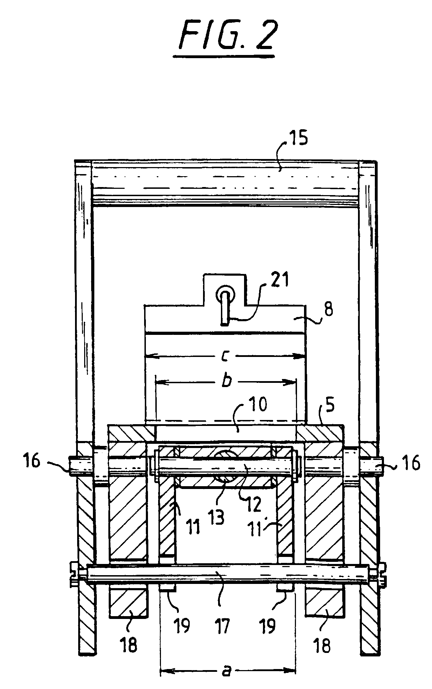

Der Antrieb des Segments (11) kann z.B. mittels eines handgetriebenen Antriebsrahmen (15) erfolgen, der über zweier Halbachsen (16) drehbar (Figur 2) am Grundgestell (1) aufgenommen ist. Für eine sich lösende Ankopplung des Rahmens (15) mit dem Segment (11) kann ein die Seitenteile des Rahmens (15) verbindender Stift (17) vorgesehen sein, der in längliche Nuten (19) des Segmentes (11) eingreifen kann.

Das soeben beschriebene Ausführungsbeispiel der Erfindung arbeitet wie folgt: Zunächst wird in die Nut (9) des Halters (8) ein Objektträgerglas mit der einzudeckenden Probe vertikal eingesteckt. Die Ausrichtung des Objektträgerglases mit der Probe sollte dabei derart sein, daß die Probe auf der dem Behälter (2) für die Deckgläser zugewandten Seite des Objektträgerglases aufgebracht ist. Danach wird das unterste der in den Behälter (2) eingelegten Deckgläser durch Betätigung des Schiebers (6) aus dem Behälter (2) herausgeschoben, bis es mit dem Objektträgerglas in Berührung kommt. Das herausgeschobene Deckglas kommt dabei oberhalb des Fensters (10) der Stützplatte (5) zu liegen. Danach kehrt der Schieber (6) in seine Ausgangslage zurück. Aus einer Dosieranlage (21), die oberhalb des Halters (8) angeordnet ist, werden einige Tropfen eines optischen Mediums auf die Oberfläche des Deckglases aufgebracht. Danach wird der Rahmen (15) aus der in Figur 1 mit I bezeichneten, durchgezogenen Stellung manuell nach unten gedrückt. Bei der dadurch verursachten Drehung des Rahmens (15) um die Halbachsen (16) greift der Stift (17) des Rahmens (15) in die Nut (19) des Segments (11) ein. Dadurch erfolgt eine Mitnahme des Segments (11), das um die Drehachse (12) rotiert. Das Segment (11) greift durch das Fenster (10) in der Stützplatte (5) hindurch und hebt das Deckglas an. Bei einer weiteren Drehung des Segmentes (11) wird das Deckglas durch eine Schwenkbewegung auf das vertikal ausgerichtete Objektträgerglas aufgebracht.

Durch entsprechende Einstellung einer Anschlagschraube (22) für das Bauteil (13) ist die Drehachse (12) des Segments (11) zunächst auf der von der Probe abgewandten Seite des Objektträgerglases (9) positioniert. Dadurch wird erreicht, daß das Deckglas zunächst mit dem unteren Rand des Objektträgerglases in Berührung kommt. Bei weiterer Drehung des Segmentes (11) und die dadurch resultierende Anpreßkraft zwischen Deckglas und Objektträgerglas erfolgt eine horizontale Bewegung der Drehachse (12) des Segmentes (11), indem das Bauteil (13) gegen die Kraft der Feder (14) horizontal verschoben wird. Die Drehachse (12) wandert dabei in Richtung auf den Behälter (2) für Deckgläser und passiert die Ebene des Objektträgerglases. Durch diese horizontale Bewegung der Drehachse (12) wird erreicht, daß die horizontale Linie maximaler Anpreßkraft zwischen Deckglas und Objektträgerglas vom unteren Rand zum oberen Rand von Objektträgerglas und Deckglas wandert. Durch diese Wanderung der Linie maximaler Anpreßkraft wird eine Walzbewegung simuliert, durch die zwischen Deckglas und Objektträgerglas eventuell eingeschlossene Luftblasen nach oben herausgedrückt werden.

Die Bewegung des Rahmens (15) wird fortgesetzt bis der Rahmen (15) mit einer zweiten Anschlagschraube (20) in Kontakt tritt. Diese Anschlagschraube (20) ist wiederum so eingestellt, daß der Anschlag zwischen Rahmen (15) und Anschlagschraube (20) in der Stellung erreicht wird, in der die Linie maximaler Anpreßkraft den oberen Rand des Deckglases erreicht hat. Der Rahmen (15) befindet sich dabei in der in der Figur 1 gestrichelt dargestellten Stellung II. Anschließend wird der Rahmen (15) wieder in seine Ausgangsstellung zurückgeführt. Bei dieser Rückwärtsbewegung des Rahmens (15) erfolgt durch die Wirkung der Feder (14) ein zweites Anwalzen des Deckglases an das Objektträgerglas, diesmal jedoch in entgegengesetzter Richtung, bis das Bauteil (13) die Anschlagschraube (22) erreicht. Bei einer weiteren Bewegung des Rahmens nach oben kehrt das Segment (11) in seine Ausgangsstellung zurück.

Die vertikale oder annähernd vertikale Lage des Objektträgerglases und des Deckglases während des Anwalzens trägt zu einer wirksamen Entfernung von Luftblasen aus dem optischen Medium bei. Versuche mit der erfindungsgemäßen Vorrichtung bei histologischen Proben haben ergeben, daß in 99% der untersuchten Proben keine Luftblasenbildung beobachtet wurde.

Bei dem in der Figur 1 dargestellten Ausführungsbeispiel sind für den Schieber (6) und das Segment (11) zwei unterschiedliche manuelle Antriebe, der Rahmen (15) und die Stange (7) vorgesehen. Es ist jedoch auch möglich, Rahmen (15) und Stange (7) über einen auskoppelbaren Antrieb miteinander zu koppeln. So kann erreicht werden, daß bei einer Bewegung des Rahmens (15) aus der in Figur 1 mit I bezeichneten Stellung nach rechts der Antrieb (7) für den Schieber (6) betätigt wird. Bei der Bedienung einer solchen alternativen Ausführungsform der Erfindung wird der Rahmen (15) nach Einstecken eines Objektträgerglases zunächst nach rechts bewegt, wodurch ein Deckglas oberhalb des Fensters (10) der Stützplatte (5) positioniert wird. Anschließend wird der Rahmen wie oben beschrieben zurück in die mit I bezeichnete Stellung und darüberhinaus bis in die mit bezeichnete Stellung bewegt, wodurch das Eindecken der Probe erfolgt. Weiterhin kann der Rahmen (15) auch noch mit einer Schlauchpumpe für die Dosieranlage (21) gekoppelt sein, so daß bei der Bewegung des Rahmens (15) zwischen der mit I bezeichneten Stellung und dem Eingreifen des Stiftes (17) in das Segment (11) selbsttätig das optische Medium auf die Oberfläche des Deckglases gebracht wird.

## Patentansprüche

1. Vorrichtung zur Abdeckung von auf einem Objektträger aufgebrachten Proben mit einem Deckglas, mit einer Halterung (8, 9) zur Aufnahme von Objektträgern und einer Einrichtung (11) zum Aufbringen eines Deckglases auf einen in der Halterung aufgenommenen Objektträger, dadurch gekennzeichnet, daß die Halterung zur Aufnahme von Objektträgern (8, 9) so ausgebildet ist, daß die Normale auf einen darin aufgenommenen Objektträger bei bestimmungsgemäßem Gebrauch mindestens 45° gegenüber der Vertikalen geneigt ist.

2. Vorrichtung nach Anspruch 1, wobei die Einrichtung (8, 9) zum Aufbringen der Deckgläser drehbar oder schwenkbar an einem die Halterung tragenden Bauteil (1) angeordnet ist.

3. Vorrichtung nach Anspruch 2, wobei die Dreh- oder Schwenkachse (12) in horizontaler Richtung beweglich gelagert ist.

4. Vorrichtung nach Anspruch 3, wobei die Dreh- oder Schwenkachse (12) federnd gelagert ist.

5. Vorrichtung nach einem der Ansprüche 1 bis 4, wobei die Halterung (8, 9) zur Aufnahme des Objektträgers in vertikaler oder annähernd vertikaler Ausrichtung der Objektträgerfläche ausgebildet ist.

6. Vorrichtung nach Anspruch 5, wobei die Drehachse (12) vor dem Aufbringen des Deckglases zur vertikalen Ebene des Objektträgerglases horizontal versetzt positioniert ist.

7. Vorrichtung nach einem der Ansprüche 1 bis 5, wobei die Einrichtung (11) zum Aufbringen der Deckgläser durch ein Fenster (10) in einer zur Aufnahme eines Deckglas dienenden Stützplatte (5) hindurchgreift.

8. Vorrichtung nach Anspruch 7, wobei ein Vorratsbehälter (2) für Deckgläser und eine Schubvorrichtung (6, 7) zum Transport jeweils eines einzelnen Deckglases in eine das Fenster (10) der Stützplatte (5) abdeckende Position vorgesehen sind.

9. Vorrichtung nach Anspruch 8, wobei für die Schwenkbewegung (11) der Einrichtung zum Aufbringen der Deckgläser und für die Vorschubeinrichtung (6) ein gemeinsamer Handantrieb (15) vorgesehen ist.

10. Vorrichtung nach einem der Ansprüche 1 bis 9, wobei eine Dosiereinrichtung (21) zum Aufbringen einer Lösung auf die Deckgläser vorgesehen ist.

## Claims

1. Apparatus for covering specimens which have been arranged on a specimen slide with a cover glass, having a mount (8, 9) for holding specimen slides and a device (11) for fitting a cover glass to a specimen slide which is held in the mount, characterized in that the mount for holding specimen slides (8, 9) is designed in such a way that the normal to a specimen slide held therein is inclined at least 45° to the vertical when used correctly.

2. Apparatus according to Claim 1, in which the device (8, 9) for fitting the cover glasses is arranged rotatably or pivotably on a component (1) which supports the mount.

3. Apparatus according to Claim 2, in which the rotation or pivot pin (12) is mounted in such a manner that it can move in the horizontal direction.

4. Apparatus according to Claim 3, in which the rotation or pivot pin (12) is spring-mounted.

5. Apparatus according to one of Claims 1 to 4, in which the mount (8, 9) for holding the specimen slide is formed in the vertical or approximately vertical orientation of the specimen slide surface.

6. Apparatus according to Claim 5, in which the rotation pin (12), before the cover glass is fitted, is positioned horizontally offset with respect to the vertical plane of the specimen slide glass.

7. Apparatus according to one of Claims 1 to 5, in which the device (11) for fitting the cover glasses engages through a window (10) in a support plate (5) which serves to hold a cover glass.

8. Apparatus according to Claim 7, in which a storage container (2) for cover glasses and a pusher apparatus (6, 7) for conveying in each case a single cover glass into a position in which it covers the window (10) of the support plate (5) are provided.

9. Apparatus according to Claim 8, in which a common manual drive (15) is provided for the pivoting movement (11) of the device for fitting the cover glasses and for the advancer device (6).

10. Apparatus according to one of Claims 1 to 9, in which a metering device (21) for applying a solution to the cover glasses is provided.

## Revendications

1. Dispositif de couverture d'échantillons placés sur un support d'objet, comprenant un verre de recouvrement, une fixation (8, 9) destinée à recevoir des supports d'objets, et un dispositif (11) destiné à amener un verre de recouvrement sur un support d'objet reçu dans la fixation, caractérisé en ce que la fixation destinée à recevoir des supports d'objets (8, 9) est conçue de telle sorte que la normale à un support d'objet reçu dans celle-ci soit inclinée d'au moins 45° par rapport à la verticale dans une utilisation conforme aux prescriptions.

2. Dispositif selon la revendication 1, dans lequel le dispositif (8, 9) destiné à amener les verres de recouvrement est disposé à rotation ou à pivotement sur un élément (1) portant la fixation.

3. Dispositif selon la revendication 2, dans lequel l'axe de rotation ou de pivotement (12) est monté mobile dans la direction horizontale.

4. Dispositif selon la revendication 3, dans lequel l'axe de rotation ou de pivotement (12) est monté à ressort.

5. Dispositif selon l'une quelconque des revendications 1 à 4, dans lequel la fixation (8, 9) destinée à recevoir le support d'objet est formée avec une orientation verticale ou approximativement verticale de la surface du support d'objet.

6. Dispositif selon la revevendication 5, dans lequel l'axe de rotation (12), avant que le verre de recouvrement ne soit amené dans le plan vertical du verre du support d'objet, est décalé horizontalement.

7. Dispositif selon l'une quelconque des revendications 1 à 5, dans lequel le dispositif (11) destiné à amener les verres de recouvrement vient en prise à travers une fenêtre (10) dans une plaque de support (5) servant à recevoir un verre de recouvrement.

8. Dispositif selon la revendication 7, dans lequel un réservoir (2) pour des verres de recouvrement et un dispositif de poussée (6, 7) pour transporter dans chaque cas un verre de recouvrement individuel sont prévus dans une position recouvrant la fenêtre (10) de la plaque de support (5).

9. Dispositif selon la revendication 8, dans lequel il est prévu une commande manuelle commune (15) pour le mouvement de pivotement (11) du dispositif destiné à amener les verres de recouvrement et pour le dispositif d'avance (6).

10. Dispositif selon l'une quelconque des revendications 1 à 9, dans lequel un dispositif de dosage (21) est prévu pour amener une solution sur les verres de recouvrement.
